Europäisches Patentamt

European Patent Office

Office européen des brevets

(19)

(11) Veröffentlichungsnummer: **0 185 952**

**A1**

(12) # EUROPÄISCHE PATENTANMELDUNG

(21) Anmeldenummer: 85115040.9

(51) Int. Cl.⁴: **B62D 15/00**

(22) Anmeldetag: 27.11.85

(30) Priorität: 27.11.84 DE 3443102

(43) Veröffentlichungstag der Anmeldung:
02.07.86 Patentblatt 86/27

(84) Benannte Vertragsstaaten:
AT BE CH DE FR GB IT LI LU NL SE

(71) Anmelder: **Winsauer, Ernst**
**Hölzlestrasse 2e**
**A-6971 Hard/Vlbg(AT)**

(72) Erfinder: **Winsauer, Ernst**
**Hölzlestrasse 2e**
**A-6971 Hard/Vlbg(AT)**

(74) Vertreter: **Riebling, Günter, Dr. et al**
**Patentanwälte Dr.-Ing., Dipl.-Ing., Ing.(grad) Günter**
**Riebling Dr.-Ing., Dipl.-Ing. Peter Riebling Rennerle**
**10 Postfach 3160**
**D-8990 Lindau (Bodensee)(DE)**

(54) **Zwangslenkung für eine Vorlaufachse oder Nachlaufachse eines Lastkraftwagens.**

(57) Eine Zwangslenkung für eine Vorlaufachse oder Nachlaufachse (12) eines Lastkraftwagens wird bei dessen Rückwärtsfahrt unterhalb einer bestimmten Geschwindigkeit von beispielsweise 20 km/h wirksam. Die Zwangslenkung ist gekennzeichnet durch eine direkte und analoge Steuerung (6,18) ohne Steuerausschläge.

FIG 1

EP 0 185 952 A1

Zwangslenkung für eine Vorlaufachse oder Nachlaufachse eines Lastkraftwagens

Die Erfindung betrifft eine Zwangslenkung für eine Vorlaufachse und/oder Nachlaufachse (Zusatzachse) eines Lastkraftwagens, die bei dessen Vorwärtsfahrt oder Rückwärtsfahrt unterhalb einer bestimmten Geschwindigkeit wirksam wird, mit einem bei Vorliegen dieser Bedingungen selbsttätig aktivierten Steuergerät, das von den momentanen Lenkeinschlägen einer Vorderachse des Lastkraftwagens beaufschlagt wird und das seinerseits einen Antrieb beaufschlagt, der die Vorlaufachse bzw. die Nachlaufachse entsprechend dem Lenkeinschlag der Vorderachse einschlägt, wobei zwei Fühler vorgesehen sind, die vom Ausschlag einesLenkhebels bzw. einer Spurstange der Vorlaufachse bzw. der Nachlaufachse beaufschlagt werden und die diese Beaufschlagung an eine Steuerung weiterleiten, die ihrerseits ein Steuerventil beaufschlagt, das in einem Hydraulikkreis den Antrieb steuert.

Eine derartige Zwangslenkung beschreibt die DE-OS 3122096 des Anmelders. Sie hat sich an und für sich gut bewährt. Allerdings hat die Praxis ergeben, daß die Lenkung unruhig ist und nicht sehr genau arbeitet. Dies beruht darauf, daß dort die Pneumatik-Ventile, die den Antrieb steuern, impulsartig beaufschlagt werden und diese impulsartige oder schrittweise Beaufschlagung wird natürlich an die Zwangslenkung weitergeleitet. Außerdem ist die bekannte Zwangslenkung, bedingt durch die Pneumatik-Steuerventile, doch verhältnismässig kompliziert, teuer und störanfällig aufgebaut.

Der Erfindung liegt daher die Aufgabe zugrunde, eine Zwangslenkung der eingangs genannten Art vorzuschlagen, die so weitergebildet ist, daß mit wesentlich einfacheren Mitteln die dort vorhandene schrittweise Ansteuerung der Vorlaufachse bzw. Nachlaufachse vermieden wird.

Zur Lösung dieser Aufgabe ist die Erfindung dadurch gekennzeichnet, daß das Steuerventil direkt und analog von der Steuerung beaufschlagt wird.

Dadurch vermeidet man das schrittweise Ansteuern des Antriebs zur Beaufschlagung der Vorlaufachse bzw. Nachlaufachse. Der gesamte Pneumatikteil der bekannten Steuerung kann entfallen. Stattdesen erfolgt eine Ansteuerung des Hydraulikteils direkt vom mechanischen Teil aus. Es werden also wesentlich weniger Teile verwendet und die gesamte Zwangslenkung arbeitet jetzt vollständig ruhig, weil die Vorlaufachse oder die Nachlaufachse genau und kontinuierlich angesteuert werden, ohne daß zwischen den einzelnen Lenkausschlägen Steuersprünge entstehen. Bei der vorliegenden Erfindung wird, wie bei der erwähnten älteren Zwangslenkung , die Vorlaufachse oder Nachlaufachse in Abhängigkeit vom Lenkeinschlag des Lenkhebels gesteuert.

Bei dem erwähnten Stand der Technik ist auch schon vorgesehen, Lenkeinschlagmelder zu verwenden, welche über Bowdenzüge den jeweiligen Lenkeinschlag an das Steuergerät melden,wobei die Bowdenzüge an den beiden Enden eines gemeinsamen, schwenkbaren Steuerhebels angreifen, der über eine Kulissenführung das Steuerventil mit der Bewegungsdifferenz der beiden Bowdenzüge beaufschlagt. In Weiterbildung dieses Gedankens wird es bevorzugt, wenn die Kulissenführung zwei axial zueinander versetzte Steuerbahnen aufweist. Dadurch wird die Steuerung besonders genau, weil jetzt eine kurze Schwenkbewegung des Steuerhebels ausreicht, um das Steuerventil entsprechend zu beaufschlagen.

Diesbezüglich wird es ebenfalls bevorzugt, wenn die Kulissenführung schräg einander gegenüberliegende Steuerkanten aufweist. In der Kulissenführung läuft ein mit einem Kugellager versehener Fühlhebel, der sofort eine entsprechende Schwenkbewegung veranlasst, wenn er sich nur geringfügig außerhalb des Bereichs der Mittelstellung zwischen diesen Steuerkanten befindet. Durch diese Maßnahme wird also ebenfalls die erfindungsgemässe Steuerung besonders präzise sowie kontinuierlichanalog arbeitend ausgebildet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

In den Figuren zeigt:

Figur 1 schematisch ein Schaltschema zur Erläuterung der Zwangslenkung nach der Erfindung;

Figur 1a das hierbei verwendete Steuerventil im Detail;

Figur 2 perspektivisch den mit diesem Steuerventil zusammenarbeitenden mechanisch-hydraulischen Steuerkasten, und zwar dessen linken Teil;

Figur 3 den rechten Teil des Steuerkastens nach Figur 2, ebenfalls in einerExplosionszeichnung;

Figur 4 eine Draufsicht auf den Kulissenschieber mit seinen Steuerbahnen;

Figur 5 die Teile nach Figur 2 und 3 in explosionsartiger Darstellung.

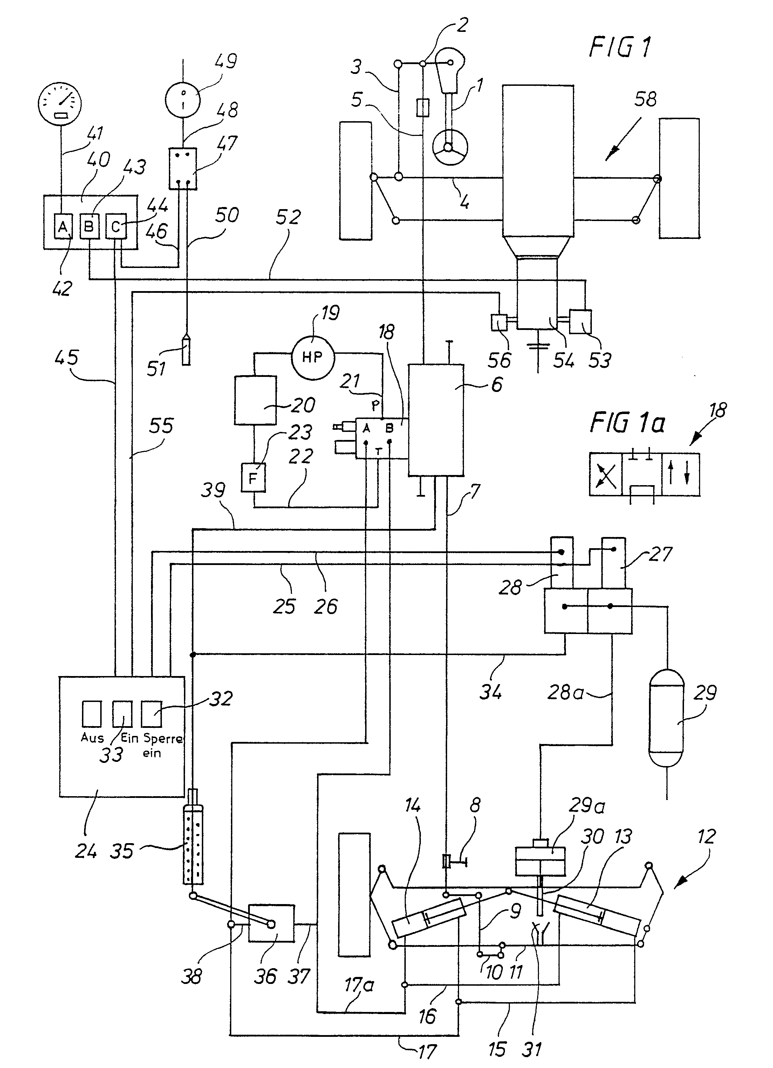

An einer Lenksäule 1 ist ein Lenkhebel 2 angesetzt, dessen Lenkungseinschlag über eine Schubstange 3 auf die Lenkung 4 der Vorderachse des Kraftfahrzeuges geht (vgl. Figur 1).

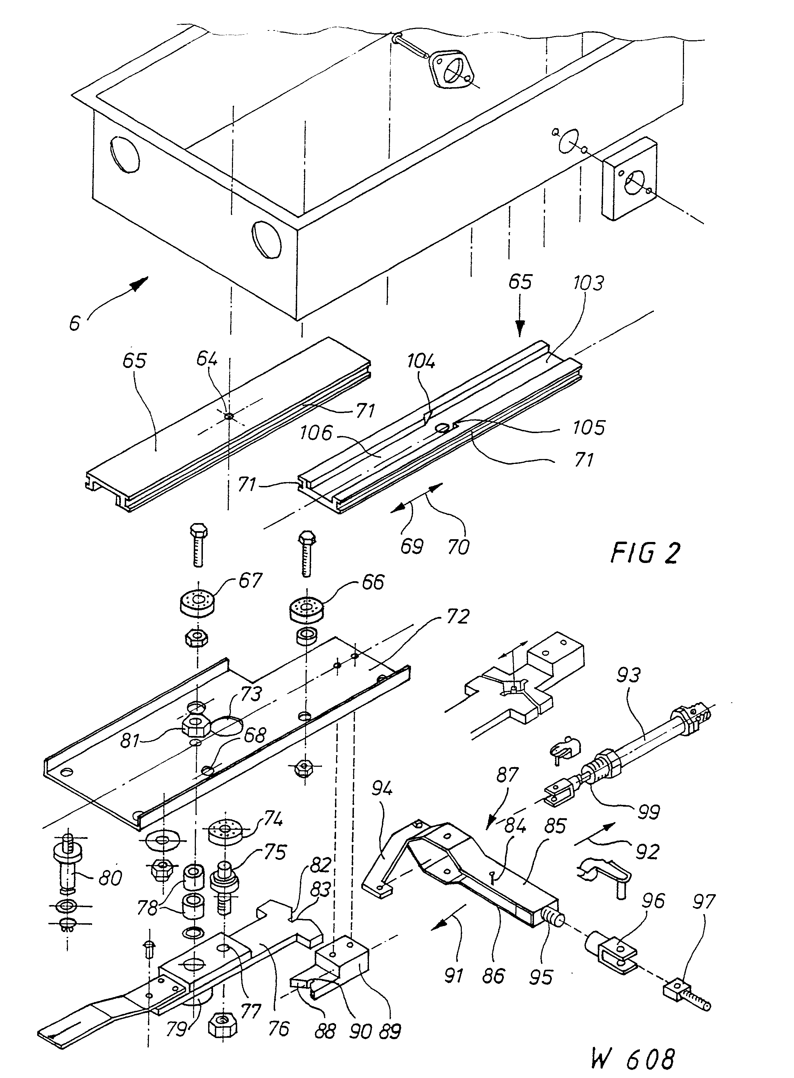

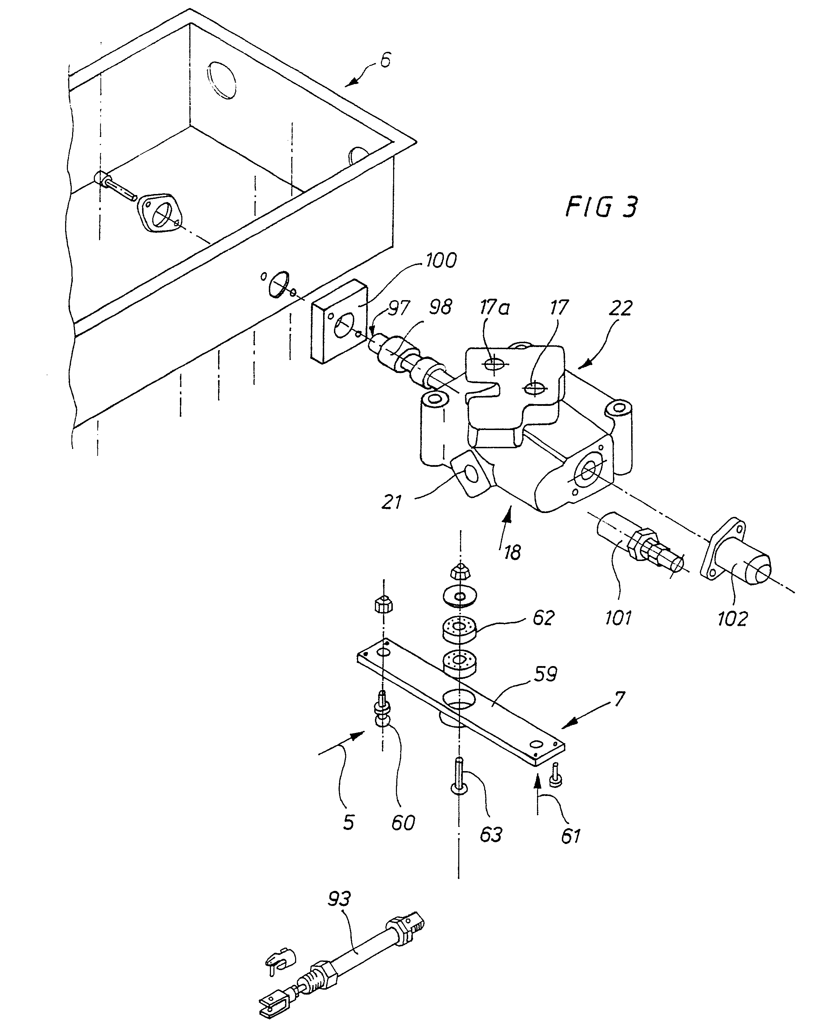

Am Lenkhebel 2 sitzt im Lenkeinschlagmelder ein Bowdenzug 5 an, der in einen mechanisch, hydraulischen Steuerkasten 6 mündet. Der mechanisch, hydraulische Steuerkasten ist anhand der Figuren 2 und 3 näher dargestellt.

Vom mechanichen Steuerkasten 6 ausgehend ist ein weiterer Bowdenzug 7 angeordnet, der uber einen Halter 8 auf einen Winkelhebel 9 endet, der seinerseits über ein kurzes Ausgleichsgestänge 10 mit der Spurstange 11 der Vor- oder Nachlaufachse 12 verbunden ist.

Die Nachlaufachse hat zwei doppeltwirkende Zylinder 13 und 14, wobei der Vorschubraum des einen Hydraulikzylinders 14 mit dem Rückschubraum des anderen Hydraulikzylinders 13 über die Leitung 15 verbunden ist, während umgekehrt der Vorschubraum des Hydraulikzylinders 13 mit dem Rückschubraum des Hydraulikzylinders 14 über die Leitung 16 verbunden ist.

Von den Leitungen 15,16 ausgehend zweigen Leitungen 17,17a ab, die zum hydraulischen Steuerventil 18 hin führen, welches von dem mechanisch hydraulischen Steuerkasten 6 über den Bowdenzug 5 oder über (nicht dargestellte) Hydraulikleitungen angesteuert wird.

Die Anschlüsse am hydraulischen Steuerventil sind mit A und B gekennzeichnet, das Schaltschema des hydraulischen Steuerventils 18 ist in Figur 1a noch angegeben.

Eine Hydraulikpumpe 19 saugt vom Tank 20 Hydrauliköl an und führt es über die Leitung 21 in das hydraulische Steuerventil 18 ein, und zwar über den Anschluß E. In Ruhestellung fließt das Hydrauliköl über den Anschluß T und die Leitung 22 und den Filter 23 wieder in den Tank 20 zurück.

Es ist ferner ein kleiner Luftteil vorhanden, um die gesamte Anlage einzuschalten. Er besteht aus folgenden Teilen:

Von einem Bedienungsgerät 24 ausgehend werden über die Leitungen 25 und 26 zwei elektromagnetische Ventile 27 und 28 angesteuert. Diese elektromagnetischen Ventile 27,28 werden gemeinsam von einem Pneumatikkreis 29 mit Luft versorgt.

Das elektropneumatische Ventil 27 bedient über die Leitung 28a die mechanische Rückfahrsperre 29a bei Bedarf. Es handelt sich hierbei um einen pneumatisch betätatigten Bolzen 30, der in eine mechanische Verriegelung 31 einrastet und damit die Spurstange blockiert und auf Geradeaus-Stellung hält.

Die Bedienung dieses Ventils 27 erfolgt über den Knopf 32. Mit dem Knopf 32 wird die Lenkung über die Leitung 26 und das pneumatische Ventil 28 eingeschaltet. Dieses Ventil 28 wirkt über die Leitung 34 auf einen Luftzylinder 35 für den Umschalter 36. Der Luftzylinder 35 enthält eine Rückzugfeder, so daß der Kolben stets in der oberen Position durch die Feder gehalten wird, wenn das Ventil drucklos ist. Bei eingeschaltetem, elektropneumatischem Ventil 28 wird der Kolben des Teils 35 nach unten geschoben, und das Kugelventil 36 ist gesperrt, d.h. die Leitungen 37,38 haben zueinander keine Verbindung, so daß zwei voneinander getrennte Kreise ausgebildet sind. Diese Kreise sind die Leitungen 17,17a, so daß die Nachlaufachse über diese Leitungen hydraulisch gelenkt wird.

Sobald das Fahrzeug in Vorwärtsfahrt eine gewisse Geschwindigkeit überschreitet, schaltet sich das hydraulische Steuerventil 18 in Sperrstellung, d.h. die Eingänge A,B sind gesperrt und die Leitung 34 ist luftlos, so daß der Luftzylinder 35 nicht angesteuert ist, und die Rückzugsfeder den Kolben in der obere Position hält. Damit ist das Kugelventil 36 offen und die Leitungen 37,38 haben Durchgang, so daß die hydraulischen Steuerleitungen 18,17 durchgängig sind, so daß die Nachlaufachse 12 frei bewegbar ist.

Der zweite Teil der Luftanlage besteht aus der Leitung 39, und diese Leitung 39 bewirkt ein Umschalten im Steuerkasten 6 bei der Vorwärtsfahrt, die anhand der folgenden Figuren dann noch näher beschrieben wird.

Der elektrische Teil schaltet die Lenkung der Zusatzachse (Nach- oder Vorlaufachse) bei niedrigen Geschwindigkeiten ein und bei größeren Geschwindigkeiten (ab beispielsweise 20 km/h) ab.

Bei diesen größeren Geschwindigkeiten soll die Nach- oder Vorlaufachse frei lenkbar sein und der elektrische Steuerteil bewirkt dies, wie nachfolgend beschrieben wird:

Der Grenzwertgeber 40 wird vom Impulsgeber 53 genauso wie der Tacho 41 angesteuert. Er enthält drei Anschlüsse, nämlich die Anschlüsse 42,43,44; an den Anschluß 44 ist eine Leitung 45 angeschlossen, die mit dem Bedienungsgerät 24 gekoppelt ist. Vom Anschluß 44 führt eine weitere Leitung 46 zu einem Relais 47, welches seinerseits über eine Leitung 48 mit dem Zündschloss 49 in Verbindung steht. Sobald das Relais über die Leitung 48 Strom bekommt, werden die Kontakte geschlossen und die Leitung 46 ist mit der Leitung 5o verbunden. Die Leitung 5o ist an der Sicherung 51 für den Tachograph angeschlossen; damit ist sichergestellt, wenn die Sicherung beim Tachographen durchbrennt, daß das gesamte Gerät stromlos geschaltet ist und die Nachlaufachse frei lenkbar ist, bleibt und nicht zwangsgelenkt wird. Bei einer vereinfachten Schaltung können der Schalter 56, das Relais 47 und die Sicherung 51 entfallen.

An den Anschluß 43 ist eine Leitung 52 angeschlossen, die zu einem Impulsgeber 53 am Getriebe 54 geht.

Eine zweite Lenkung 55 geht vom Bedienungsgerät 24 zum Rückfahrscheinwerfer-Schalter 56.

Mit Einlegen des Rückwärtsganges wird der Rückwärts-Scheinwerfer-Schalter eingeschaltet und über die Leitung 55 wird das Bedienungsgerät 24 eingeschaltet und nimmt die gesamte Anlage in Betrieb, ohne daß man einen Schalter auslösen muß.

Über den am Getriebe 54 angeflanschten Impulsgeber 53 wird die Leitung 52 auf den Anschluß 43 des Grenzwertgebers 40 geschaltet, so daß bei Überschreitung der eingestellten Geschwindigkeit von z.B. 20 km/h das Bedienungsgerät über den Anschluß 45 abgeschaltet wird und die Zwangslenkung derVor- oder Nachlaufachse entfällt.

Es wird noch darauf hingewiesen, daß der Grenzwertgeber 40 und der Impulsgeber 53 herkömmliche Schaltanordnungen sind, die z.B. von der Fa. Kienzle hergestellt werden.

Im folgenden wird nun anhand des vorliegenden Kreislaufs die Zwangslenkung der Vor- oder Nachlaufachse 12 beschrieben.

Einsatzgebiet der vorliegenden Erfindung sind alle Geschwindigkeiten unterhalb einer bestimmten Geschwindigkeit von z.B. 20 km/h, wobei die Zwangslenkung der Vor- oder Nachlaufachse sowohl beim Vorwärtsfahren als auch beim Rückwärtsfahren wirksam sein soll.

Wenn das Fahrzeug sich unterhalb dieses Geschwindigkeitsbereichs von 20 km/h befindet, wird das Bedienungsgerät 24 über die Leitung 45 angesteuert; über die Leitung 55 erfolgt die Signalmeldung an das Bedienungsgerät, das das Fahrzeug rückwärts fährt.

Für diesen Fahrzustand wird über dem Bowdenzug 5, der am Lenkhebel 2 ansetzt, der mechanisch hydraulische Steuerkasten 6 angesteuert und damit gemäss den nachfolgend zu beschreibenden Figuren 2 und 3 das am mechanisch-hydraulischen Steuerkasten 6 angeflanschte Steuerventil 18. Die Steuerkreisläufe 17,17a sind angesteuert, und es erfolgt eine Zwangslenkung der Nachlaufachse 12 über die Hydraulikzylinder 13 und 14 entsprechend dem Lenkeinschlag am Lenkhebel 2.

Ist der erforderliche Lenkungseinschlag an der Nachlaufachse 12 erreicht, dann erfolgt über das Gestänge 9,10 und den Bowdenzug 7 eine Rückmeldung an den mechanisch-hydraulischen Steuerkasten 6, der damit in seine Ruhelage übergeht und damit einen weiteren Hydraulikölzufluß zu den Hydralikzylinder 13,14 verhindert, so daß die Nachlaufachse 12 in der eingeschlagenen Stellung verbleibt.

Damit läuft sie genau gleichförmig in ihrem Lenkeinschlag, wie der Lenkeinschlag der Vorderachse 58.

Eine Abweichung des Steureinschlages an der Vorderachse 58 in Bezug zur Vor- oder Nachlaufachse 12 wird über den Bowdenzug 7 dem Steuerkasten 6 gemeldet und diese gibt sofort einen entsprechenden Steuerbefehl auf das Steuerventil 18, so daß evtl. bestehende Differenzen sofort ausgeglichen werden.

Kern der Erfindung ist, daß eine analoge und kontinuierliche Steuerung stattfindet , d.h. die Lenkung kann langsam oder schnell lenken und lenkt nicht in Impulsen, weil stets dem Lenkungseinschlag der Vorderachse 58 entsprechend nachgesteuert wird.

Es handelt sich also um eine kombinierte mechanischhydraulische Proportionalsteuerung, weil proportional dem Lenkungseinschlag der Vorderachse 58 die Nachlaufachse 12 nachgesteuert wird.

Einzelheiten des mechanischen Steuerkastens 6 werden anhand der Figuren 2 und 3 nachfolgend beschrieben.

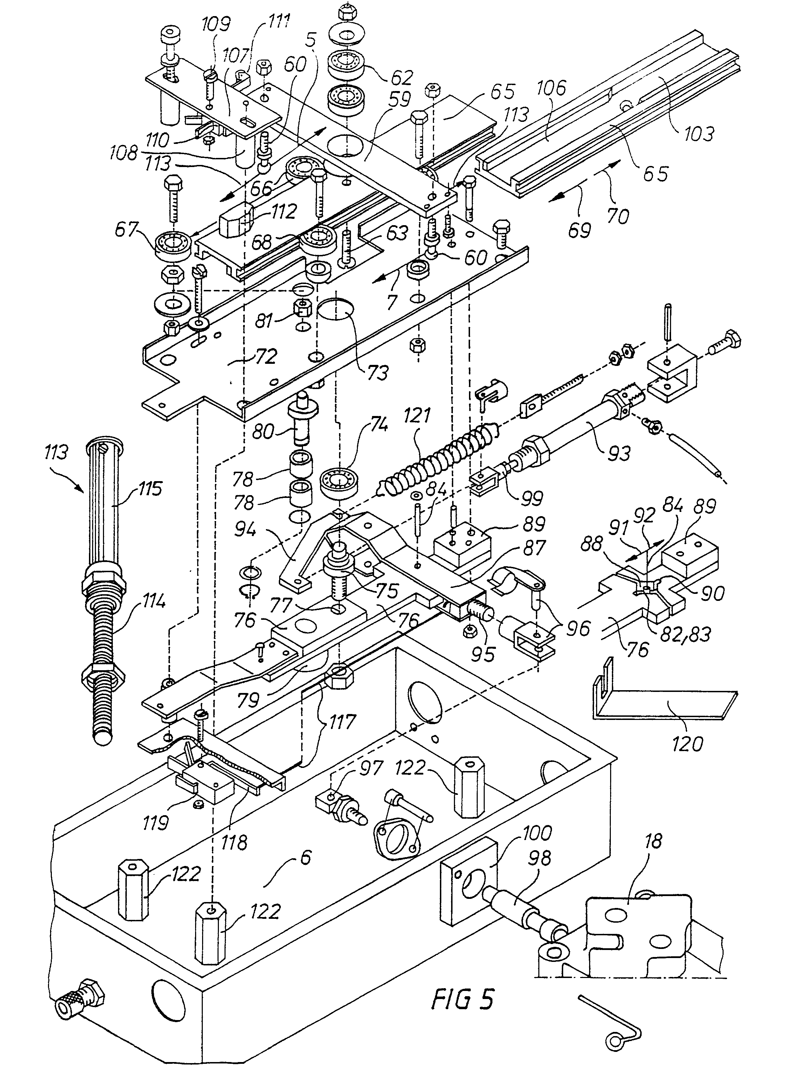

In der Figur 2 ist der linke Teil des mechanischen Steuerkastens 6 gezeigt, während in Figur 3 der rechte Teil des mechanischen Steuerkastens gezeigt ist. Figur 5 zeigt alle Teile nochmals unter räumlich richtiger Zuordnung explosionsartiger Darstellung.

Zweck dieses mechanischen Steuerkastens ist, eine Differenzbildung zwischen dem Bowdenzug 7 und dem Bowdenzug 5 herbeizuführen und entsprechend der Differenz zwischen diesen beiden Bowdenzügen das Steuerventil 18 anzusteuern.

Die Differenzbildung und die Ansteuerung erfolgt auf mechanischem Wege, wie nachfolgend beschrieben wird:

Der Bowdenzug 5 setzt an dem Steuerhebel 59 an und zwar über den Kugelkopf 60.

Der gegenüberliegende Bowdenzug 7 setzt über einen nicht näher dargestellten Kugelkopf 61 an.

Mit Hilfe des Bolzens 63 is der Steuerhebel 59 an der Bohrung 64 eines Kulissenschiebers 65 auf der Rückseite befestigt, wobei in der Zeichnung, Figur 2, auf der linken, oberen Seite der Kulissenschieber 65 von der Rückseite her gezeichnet ist, während rechts weiter unten der gleiche Kulissenschieber in umgedrehter Stellung gezeichnet ist, damit die Kulissenbahnen sichtbar sind.

Der Steuerhebel 59 sitzt auf der Oberseite des links oben dargestellten Kulissenschiebers 65 auf, wobei der Kulissenschieber 65 zwischen drei verschiedenen Kugellagern 66,67, 68 in der Pfeilrichtung 69,70 verschiebbar ist. Es ergibt sich damit eine statisch bestimmte Dreipunktlagerung. Die Kugellager 67,66,68 liegen an den jeweiligen Außenseiten dieses Kulissenschiebers an und greifen in zugeordnete Längsnuten 71 ein. Damit ist eine Geradführung des Kulissenschiebers 65 auf eine Geräteträgerplatte 72 gewährleistet.

Das Kugellager 67 ist exzentrisch verstellbar gelagert, so daß eine spielfreie Einstellung der Geradführung des Kulissenschiebers 65 auf der Geräteträgerplatte 72 gewährleistet ist.

Durch eine Ausnehmung 73 in der Geräteträgerplatte 72 ragt ein Kugellager 74 hindurch, welches auf einem Bolzen 75 drehbar gelagert ist.

Der Bolzen 75 seinerseits ist in einem Schwenkhebel 76 fest befestigt und zwar in der Bohrung 77.

Der Schwenkhebel ist über zugeordnete Büchsen 78 schwenkbar in einer zugeordneten Aufnahme 79 gelagert, und zwar ist dieser über die zugeordnete Achse 80 und die Befestigungsmutter 81 an der Unterseite der Geräteträgerplatte 72 schwenkbar gelagert.

Die Vorderseite des Schwenkhebels 76 ist mit einer keilförmigen Öffnung 82 versehen, an deren Grund eine Nut 83 angebracht ist, die zum Eingriff eines zugeordneten Stiftes 84 gedacht ist. Der Stift 84 ist im Zwischenraum zwischen den Schenkeln 85,86 eines Schwenkhebels 87 angeordnet, und der Hebel 76 greift mit seiner Ausnehmung 82 zwischen die Schenkel 85,86 hinein und liegt auf den Schenkeln auf, ist dort also geführt, wobei wahlweise der Stift 84 in die Nut 83 eingreifen kann oder auch nicht.

Gegenüberliegend der keilförmigen Ausnehmung 82 am Schwenkhebel 76 ist ene weitere keilförmige Ausnehmung 88 an einem feststehenden Bock 89 angeordnet, der fest über entsprechende und nicht näher dargestellte Schrauben mit der Geräteträgerplatte 72 verbunden ist.

In der am Grund der keilförmigen Öffnung 88 im Bock 89 ist eine gleiche Nut 90 angeordnet, die in ihrer Formgebung der Nut 83 entspricht.

Beide keilförmigen Öffnungen 82,88 sind genau zueinander symmetrisch und identisch.

Zwischen diesen beiden keilförmigen Öffnungen ist ein geringer Luftspalt, so daß der Hebel 87 nicht den Bock 89 berührt, auch wenn der Hebel verschwenkt.

Wichtig ist jetzt, daß der Hebel 87 entweder in Pfeilrichtung 91 so verschiebbar ist, daß der Stift 84 in Eingriff mit der Nut 83 kommt oder er ist umgekehrt in Pfeilrichtung 92 verschiebbar, so daß der Stift 84 in Eingriff mit der Nut 90 im Bereich der keilförmigen Ausnehmung 88 am Steuerbock 89 kommt.

Es sind also immer nur zwei Stellungen möglich; entweder ist der Stift in Eingriff mit der Nut 83 am Hebel 76 oder er ist bei Verschiebung in Pfeilrichtung 92 in Eingriff mit der Nut 90 am Bock 89.

Die Verschiebung des Hebels 87 in der Pfeilrichtung 91,92 erfolgt durch die Kraft eines Luftzylinders 93, der eine Rückzugfeder 121 (Fig.5) aufweist.

Der Pneumatikzylinder 93 greift über einen Winkelhebel 94 an diesem Hebel 87 an, so daß, wenn dieses Steuerventil unter Luftdruck steht, der Hebel 87 in Pfeilrichtung 91 auf den Hebel 76 zugeschoben wird, so daß der Stift 84 in die Nut 83 eingreift.

Damit ist die Lenkeinrichtung mit der Hydraulik verbunden uno zwar über einen Gewindebolzen 95, auf den ein Gabelkopf 96 aufgeschraubt ist, der seinerseits gelenkig mit einem Mitnehmer 97 verbunden ist. Der Mitnehmer 97 ist unmittelbar stirnseitig mit der Steuerwelle 98 des Steuerventils 18 verbunden.

Wird die Vor- oder Nachlaufachse nicht zwangsgelenkt, dann ist der Steuerzylinder 93 drucklos und die Rückzugsfeder 121 zieht die Kolbenstange 99 in die Stellung 92, so daß der Hebel 87 in Pfeilrichtung 92 bewegt wird und der Stift 84 in die Nut 90 im Bereich der keilförmigen Ausnehmung 88 am Steuerbock 89 eingreift.

Damit ist der Hebel 87 in Mittelstellung arretiert und die Steuerwelle 98 des Steuerventils 18 ist in der Mittelstellung, damit ein druckloser Durchgang des Öls gewährleistet ist, weil die Leitungen 17 und 18 gesperrt sind und die Leitungen 21,22 Durchgang haben.

Die Geräteträgerplatte 72 ist mit Hilfe von drei Abstandsbolzen 122 (Fig. 5) an der Innenseite des Steuerkastens 6 befestigt, wobei die Steuerwelle mit dem Mitnehmer 97 durch eine Zwischenplatte 100 hindurchgreift und damit unmittelbar mit dem Ventil 18 in Verbindung steht.

An der Außenseite des Steuerventils 18 ist noch ein Überdruckventil 101 angeordnet, und die Steuerwelle wird von außen durch die Verschlußkappe 102 abgeschlossen.

Sobald also zwischen den Bowdenzügen 5 und 7 eine Differenzstellung erzeugt wird, wird der Hebel 59 entsprechend geschwenkt. Diese Verschwenkung bewirkt eine Verschiebung des Kulissenschiebers 65 auf der Geräteträgerplatte 72.

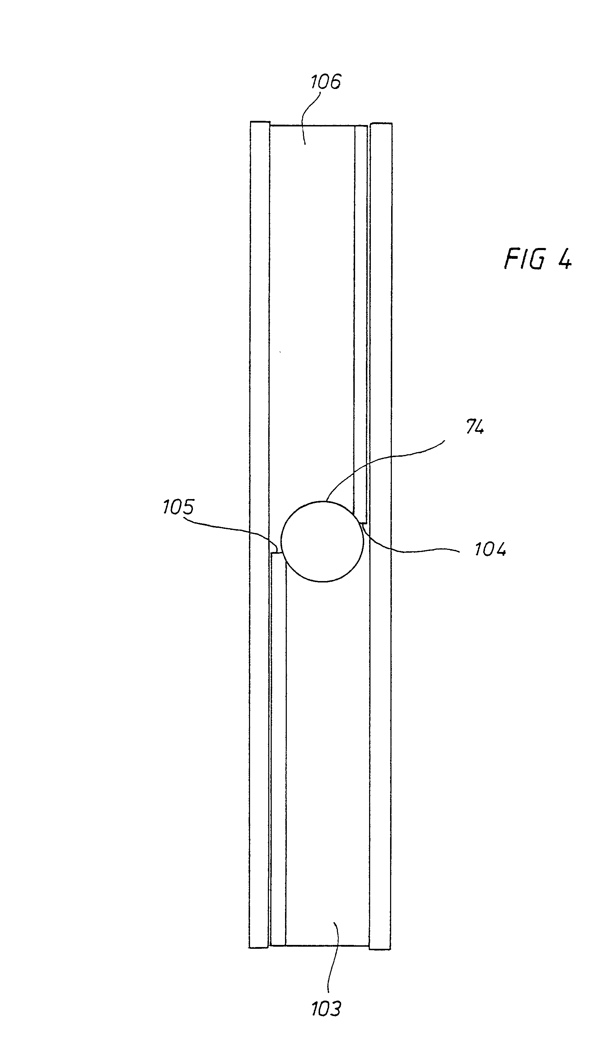

Damit wird das Kugellager 74 im Bereich der inneren Steuerbahn 103 entlang bewegt, wobei kennzeichnend ist, daß im Bereich der Steuerbahn zwei schräg gegenüberliegende Steuerkanten 104 und 105 vorhanden sind (Vgl. Fig. 4). In der Mittelstellung der Lenkung steht das Kugellager zwischen den beiden Steuerkanten 104 und 105 und zwar ohne Spiel.

Sobald eine Differenzbewegung zwschen den Bowdenzügen festgestellt wird, macht es ene Bewegung (Schwenkbewegung) um die Steuerkurve 104 herum und gelangt beispielsweise in die axial zur Steuerbahn 103 versetzte Steuerbahn 106.

Dadurch , daß die Steuerbahnen 103 und 106 zueinander axial versetzt sind, führt der Hebel 76 eine kurze Schwenkbewegung in der einen oder anderen Richtung aus, wobei die Schwenkbewegung immer gleich ist und immer einem bestimmten Schwenkwinkel entspricht.

Diese Schwenkbewegung öffnet dann über den beschriebenen Schwenkhebel 87, den Mitnehmer 97 und die Steuerwelle 98 das Ventil 18, so daß das Ventil in der einen oder anderen Richtung angesteuert wird und zwar solange, bis die Bowdenzüge die Mittelstellung erreichen, wodurch der Kulissenschieber 65 wiederum in die Mittelstellung kommt und das Kugellager 74 genau zwischen den beiden Steuerkanten 104 und 105 zu liegen kommt und das Ventil wieder genau in der Mittelstellung abgeschaltet wird bzw. sich selbst abschaltet.

Wichtig bei der vorliegenden Erfindung ist also, daß schräg einander gegenüberliegende Steuerkanten 104 und 105 vorhanden sind, so daß das Kugellager 74, wenn es nur geringfügig außerhalb des Bereichs dieser Mittelstellung zwischen den Steuerkanten 104 und 105 gelangt, sofort eine entsprechende Schwenkbewegung dieses Hebels veranlasst. Es ist damit eine stufenlose Regelung realisiert, die schon bei geringen Differenzen zwischen den Bowdenzuglängen 5,7 reagiert und damit besonders empfindlich ist.

Es bedarf also keiner komplizierte, elektronischen oder hydraulischen Verstärkerschaltungen.

In Figur 4 ist die Draufsicht auf den Kulissenschieber mit seinen Steuerbahnen 103,106 gezeichnet. Man sieht, daß die Steuerbahnen zueinander axial versetzt sind und die Steuerkanten 1o5 und 105 schräg einander gegenüberliegen.

Das Kugellager 74 in der Mittelstellung eingezeichnet, wo ersichtlich ist, daß dieses Kugellager schräg zwischen den Steuerkanten liegt.

Bei einer nur geringfügigen Verschiebung des Kulissenhebels gelangt damit das Kugellager entweder in die Bahn 106 oder Bahn 103 und damit wird sofort der Hebel 76 verschwenkt und zwar immer um einen bestimmten Schwenkwinkel.

In Figur 5 sind alle Teile der Figuren 2 und 3 nochmals in räumlich richtiger Zusammenstellung gezeichnet, wobei weitere Teile hinzugenommen sind.

Es wird zunächst eine Sicherheitseinrichtung beschrieben, die bei Bruch eines Bowdenzuges 5,7 entsprechende elektrische Sicherheitsmaßnahmen einleiten soll.

Diese Sicherheitseinrichtung besteht darin, daß eine Platte 107 fest mit der Platte 72 über einen Stehbolzen 108 verbunden ist. An der Unterseite dieser Platte 107 ist über eine Schraube 109 ein Mikroschalter 110 angeordnet, der mit seinem federbelasteten Fühlhebel 111 , an dessen vorderem Ende eine Rolle angeordnet ist, an der Steuerfläche einer Nocke 112 angreift, die fest mit dem Kulissenschieber 65 verbunden ist.

An dem Steuerhebel 59 greifen entsprechend der vorstehenden Beschreibung an den jeweiligen Kugelköpfen 60 jeweils in entgegengesetzten Richtungen ein Bowdenzug 5,7 an, wie es durch die Zeile in der Figur 5 dargestellt ist. Jeder Bowdenzug greift also an seinem zugeordneten Kugelkopf 50 an einem freien, schwenkbaren Ende des Hebels 59 an. Jeder Bowdenzug wird durch eine Rückzugseinrichtung 113 gespannt, die in der Darstellung nach Figur 5 links oben gesondert dargestellt ist. Die Rückzugseinrichtung 113 enthält eine Schraubenfeder 114, die in einem Gehäuse 115 angeordnet ist. Das Gehäuse 115 ist über die Gewindebuchse 116 fest mit einem gehäusefesten Teil des Steuerkastens 6 verbunden und über die dort gezeichnete Mutter festgeschraubt. Das Federende der Feder 117 greift an dem Hebel 59 an und zwar in entgegengesetzter Richtung zu der Angriffsrichtung des Bowdenzuges, wie es durch Pfeile in Figur 5 dargestellt ist.

Auf diese Weise bleibt der jeweilige Bowdenzug 5,7 durch die dem Bowdenzug jeweils zugeordnete Rückzugseinrichtung 113 stets gespannt.

Reisst nun ein Bowdenzug 5,7, dann wird der Hebel 59 eine einseitige Schwenkbewegung ausführen und der Kulissenschieber 65 wird in axialer Richtung mitgenommen. Hierdurch gerät die Fühlrolle des Mikroschalters 110 ausser Eingriff mit der Steuerfläche des Nockens 112 und der Mikroschalter 110 wird dadurch betätigt. Damit wird elektrisch die Zwangsführung der Achse in einen neutralen Freilauf übergeführt.

In Figur 5 ist ferner noch eine Schaltstellungsüberwachung für den Hebel 87 vorgesehen. Es kann nämlich vorkommen, daß beim Einschalten der Zwangslenkung kein Luftdruck für die pneumatische Einrichtung vorhanden ist und daher der Luftzylinder 93 luftlos ist. Der Hebel 87 kann daher nicht schalten und wird nicht umgelegt und für dieses fehlende Schaltvermögen ist die nachfolgend beschriebene Schaltstellungsüberwachung vorgesehen.

Sie besteht darin, daß an dem freien, schwenkbaren Teil des Hebels 87 ein Stahldraht 117 ansetzt, dessen anderes Ende an dem Fühlhebel 118 eines Mikroschalters 119 ansetzt. Der Mikroschalter 119 ist gehäusefest an der Unterseite der Platte 72 befestigt.

Wird der Schwenkhebel 87 wegen fehlenden Luftdruckes durch den Luftzylinder 93 nicht verschwenkt, dann bleibt der Mikroschalter 119 in seiner einen Schaltstellung und es wird eine entsprechende Warnanzeige am Armaturenbrett zur Anzeige gebracht. Erst mit Verschwenkung des Schwenkhebels 87 wird der Stahldraht 117 entsprechend bewegt und damit der Fühlhebel 118 des Mikroschalters 119 betätigt, der die entsprechende Warnanzeige am Armaturenbrett abschaltet.

Das Werkzeug 120 dient zum Aushängen der Bowdenzüge 5,7 von dem jeweils zugeordneten Kugelkopf 60.

Figur 5 zeigt ferner, daß dem Luftzylinder 93 eine Rückzugfeder 121 zugeordnet ist.

Der Nachteil der bisher bekannten Zusatzachsen ist, daß sie absolut keine Führungskräfte vom Fahrzeug auf die Straße bringen können. Das heisst, beim Angriff seitlicher Schleuderkräfte weicht die nichtzwangsgelenkte Zusatzachse seitlich aus und begünstigt das Ausbrechen des Fahrzeugs. Der Vorteil der erfindungsgemässen, zwangsgelenkten Zusatzachse ist hingegen, daß die Räder spurgetreu dem Lenkeinschlag folgen und daher als absolute Führungsachsen anzusprechen ist, welche in der Lage ist, der Schleuderwirkung des Fahrzeugs bei Einwirken seitlicher Kräfte entgegen zu wirken. Weiterer Vorteil der zwangsgelenkten Zusatzachse ist, daß ein geringerer Reifenabtrieb die Folge ist.

Wegen des kontinuierlichen Arbeitsverfahrens des erfindungsgemässen Geräts wird ein stetiger, ruckfreier Lenkeinschlag auch bei höheren Geschwindigkeiten gewährleistet. Damit ist es möglich, die zwangsgelenkte Zusatzachse auch bei Geschwindigkeiten wesentlich über 20 km/h zu betreiben.

Die vorliegende Erfindung ist nicht auf die Zwangslenkung von Zusatzachsen beschränkt, sie dient auch zur Lenkung der letzten Achse bei Dreiachs-Sattelaufliegern. Ein anderer weitgefasster Anwendungsbereich ist die feinfühlige Lenkübertragung bei Schiffslenkungen vom Steuerrad auf das Schiffsruder.

ZEICHNUNGS-LEGENDE

## ZEICHNUNGS-LEGENDE

| | |
|---|---|
| 1 Lenksäule | 31 Verriegelung |
| 2 Lenkhebel | 32 Knopf |
| 3 Schubstange | 33 " |
| 4 Lenkung | 34 Leitung |
| 5 Bowdenzug | 35 Luftzylinder |
| 6 Steuerkasten | 36 Umschalter, Kugelventil |
| 7 Bowdenzug | 37 Leitung |
| 8 Halter | 38 " |
| 9 Winkelhebel | 39 " |
| 10 Ausgleichsgestänge | 40 Grenzwertgeber |
| 11 Spurstange | 41 Tacho |
| 12 Achse | 42 Anschluß |
| 13 zylind.Hydraulik | 43 " |
| 14 "       " | 44 " |
| 15 Leitung | 45 " |
| 16 " | 46 " |
| 17 " | 47 Relais |
| 17a" | |
| 18 Steuerventil | 48 Leitung |
| 19 Hydraulikpumpe | 49 Zündschloss |
| 20 Tank | 50 Leitung |
| 21 Leitung | 51 Sicherung |
| 22 " | 52 Leitung |
| 23 Filter | 53 Impulsgeber |
| 24 Bedienungsgerät | 54 Getriebe |
| 25 Leitung | 55 2.Leitung |
| 26 " | 56 Schalter |
| 27 Ventil,elektromagn. | |
| 28 "    Rückfahrsperre | 58 Vorderachse |
| 29 Pneumatikkreis | 59 Steuerhebel |
| 30 Bolzen | 60 Kugelkopf |

65

61 Kugelkopf

91 Pfeil

92 "

63 Bolzen

93 Luftzylinder

64 Bohrung

94 Winkelhebel

65 Kulissenschieber

66 Kugellager

67 "

97 Mitnehmer

68 "

98 Steuerwelle

69 Pfeil

99 Kolbenstange

70 "

100 Zwischenplatte

71 Länsnut

101 Überdruckventil

72 Platte

102 Kappe

73 Ausnehmung

103 Steuerbahn

74 Kugellager

104 Steuerkante

75 Bolzen

105 "

76 Schwenkhebel

106 Steuerbahn

77 Bohrung

107 Platte

78 Büchse

1o8 Stehbolzen

79 Aufnahme

109 Schraube

80 Achse

110 Mikroschalter

81 Mutter

111 Fühlhebel

82 (Öffnung)Ausnehmung

112 Nocke

83 Nut

113 Rückzugseinrichtung

84 Stift

114 Schraubenfeder

85 Stift

115 Gehäuse

86 "

87 Schwenkhebel

117 Stahldraht

88 Ausnehmung

118 Fühlhebel

89 Bock

119 Mikroschalter

90 Nut

120 Werkzeug

121 Rückzugfeder

122 Abstandsbolzen

## Ansprüche

1. Zwangslenkung für eine Vorlaufachse und/oder Nachlaufachse eines Lastkraftwagens, die bei dessen Vorwärtsfahrt im Stillstand oder bei der Rückwärtsfahrt unterhalb einer bestimmten Geschwindigkeit wirksam wird, mit einem bei Vorliegen dieser Bedingungen selbsttätig aktivierten Steuergerät, das von den momentanen Lenkeinschlägen einer Vorderachse des Lastkraftwagens beaufschlagt wird und das seinerseits einen Antrieb beaufschlagt, der die Vorlaufachse bzw. die Nachlaufachse entsprechend dem Lenkeinschlag der Vorderachse einschlägt, wobei zwei Fühler vorgesehen sind, die vom Ausschlag eines Lenkhebels bzw. einer Spurstange der Vorlaufachse bzw. der Nachlaufachse beaufschlagt werden und die diese Beaufschlagung an einer Steuerung weiterleiten, die ihrerseits ein Steuerventil beaufschlagt, das in einem Hydraulikkreis den Antrieb steuert,

**dadurch gekennzeichnet,** daß das Steuerventil (18) direkt und analog von der Steuerung (6) beaufschlagt wird.

2. Zwangslenkung nach Anspruch 1 mit Lenkeinschlagmeldern an der Vorder- und Zusatzachse, welche über Bowdenzuge den jeweiligen Lenkeinschlag an ein Steuergerät melden, wobei die Bowdenzüge an den beiden Enden eines gemeinsamen, schwenkbaren Steuerhebels angreifen, der über eine Kulissenführung das Steuerventil mit der Bewegungsdifferenz der beiden Bowdenzüge beaufschlagt,

**dadurch gekennzeichnet,** daß die Kulissenführung zwei axial zueinander versetzte Steuerbahnen (103,1o6) aufweist.

3. Zwangslenkung nach Anspruch 2, **dadurch geken-**

zeichnet, daß die Kulissenführung schräg einander gegenüberliegende Steuerkanten (104,105) aufweist.

4. Zwangslenkung nach Anspruch 2, **dadurch gekennzeichnet,** daß zur Erreichung einer stufenlos einstellbaren Lenkdämpfung der Zusatzachse der Durchlaßquerschnitt des Kugelventils (36) stufenlos einstellbar ist.

5. Zwangslenkung nach Anspruch 4,

**dadurch gekennzeichnet,** daß zur stufenlosen Einstellung des Durchlaßquerschnittes des Kugelventils (36) das Zylindergehäuse des Druckluftzylinders (35) in Bezug zur Kolbenstange mittels einer klemmbaren Einstellschraube verschiebbar ist.

0 185 952

FIG 1

FIG 1a

W 608

FIG 2

W 608

0 185 952

FIG 3

W 608

0 185 952

106

FIG 4

74

105

104

103

W 608

0 185 952

FIG 5

W 608

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 122 096 (WINSAUER)<br>* ganzes Dokument * | 1,2 | B 62 D 15/00 |
| | --- | | |
| Y | US-A-4 286 798 (BUTLER et al.)<br>* Spalte 4, Zeile 50 - Spalte 5, Zeile 49; Figuren 7-9 * | 1,2 | |
| | --- | | |
| A | US-A-3 903 983 (YESKE)<br>* Zusammenfassung; Figuren 1, 2 * | 1,2 | |
| | --- | | |
| A | US-A-3 092 201 (BIEK)<br>* Spalte 3, Zeilen 43-74; Figuren 1, 2 * | 1,2 | |
| | --- | | |
| A | DE-A-2 948 181 (GOTTLOB AUWÄRTER)<br>* Ansprüche 1, 4; Figur 1 * | 1 | RECHERCHIERTE SACHGEBIETE (Int. Cl.4) |
| | --- | | B 62 D 15/00 |
| A | DE-A-3 008 461 (ESSIEUX BOURGOGNE)<br>* Ansprüche 1-3, 6, 7 * | 1,4 | B 62 D 13/00<br>B 62 D 7/00 |
| | ----- | | |

Der vorliegende Recherchenbericht wurde für alle Patentansprüche erstellt.

| Recherchenort<br>BERLIN | Abschlußdatum der Recherche<br>17-02-1986 | Prüfer<br>KRIEGER P O |
|---|---|---|